# EUROPÄISCHE PATENTSCHRIFT

(11) **EP 1 077 244 B1**
(45) Veröffentlichungstag und Bekanntmachung des Hinweises auf die Patenterteilung: **22.03.2006**
(21) Anmeldenummer: 00116584.4
(22) Anmeldetag: 01.08.2000
(51) Int. Cl.: C09J 107/00, C09J 161/04, C08L 61/06

(54) **Verwendung von reaktiven Phenolharzen bei der Herstellung von hochviskosen selbstklebenden Massen**
Use of reactive phenolic resins in the preparation of highly viscous, self-adhesive materials
Utilisation de résines phénoliques réactives dans la préparation de masses à haute viscosité autocollantes

(30) Priorität: 18.08.1999 DE 19939074
(43) Veröffentlichungstag der Anmeldung: 21.02.2001
(73) Patentinhaber: tesa AG, 20253 Hamburg (DE)
(72) Erfinder: Burmeister, Axel, 22307 Hamburg (DE); Hansen, Sven, 22765 Hamburg (DE); Leydecker, Heiko, 24730 Neustadt/Holstein (DE); Kreft, Christian, 21077 Hamburg (DE); Stähr, Jochen, 30179 Hannover (DE)

(56) Entgegenhaltungen:
- EP-A- 0 668 335
- US-A- 3 597 377
- US-A- 4 028 292
- US-A- 5 760 135
- PATENT ABSTRACTS OF JAPAN vol. 018, no. 485 (C-1248), 9. September 1994 (1994-09-09) & JP 06 158008 A (NITTO DENKO CORP), 7. Juni 1994 (1994-06-07)
- DATABASE WPI Section Ch, Week 199011 Derwent Publications Ltd., London, GB; Class A18, AN 1990-080389 XP002152949 & JP 02 034680 A (HITACHI CHEM CO LTD), 5. Februar 1990 (1990-02-05)

## Beschreibung

Die vorliegende Erfindung bezieht sich auf die Verwendung von reaktiven Phenolharzen zur chemisch/thermischen Vernetzung von druckempfindlichen Schmelzhaftklebern (pressure sensitive adhesives, PSA) auf Basis nicht-thermoplastischer Elastomerer, wie zum Beispiel Naturkautschuk, unter Verwendung von klebrigmachenden Harzen, gegebenenfalls Füllstoffen und Weichmachern und auf die Beschichtung dieser Schmelzhaftkleber zur Herstellung von selbstklebenden Artikeln, insbesondere zur Herstellung hochleistungsfähiger selbstklebender Artikel wie Bänder oder Etiketten.

Aus der herkömmlichen Technologie der lösemittelbasierten Herstellung und Beschichtung beispielsweise von Naturkautschuk-Haftklebern ist der Einsatz reaktiver Phenolharze zur Vemetzung der Klebemassen bekannt.

Zur Beschleunigung dieser Reaktion sind organometallische Derivate von Metallen der Gruppe IV des Periodensystems, anorganische Aktivatoren (Zinkoxid, Zinkresinate) sowie Säuren als geeignet beschrieben.

Andere Vulkanisationbeschleuniger sind in den Seitenketten halogenierte reaktive Phenolharze, Polychloroprene, Chlorparaffine, Zink-Stearate und Metallchloride wie zum Beispiel Zn-II-Chlorid, SnCl₂ * 2 H₂O, FeCl₃ * 6 H₂O.

In Schmelzhaftklebern auf der Basis nicht-thermoplastischer Elastomerer jedoch ist die Verwendung der bekannten thermischen Vemetzungssysteme bisher nicht möglich, da es bei der Herstellung zu Prozeßproblemen kommt.
Dieser Stand der Technik ist beispielsweise in "Doriatas Satas, Handbook of Pressure Sensitive Adhesive Technology", Second Edition, New York 1989, S. 363, oder Wemer Hofmann, "Vulkanisation und Vulkanisationshilfsmittel", 1965, BAYER, ausführlich dargestellt.

Die in den letzten Jahren entwickelten Schmelzhaftkleber auf der Polymerbasis nicht-thermoplastischer Elastomerer, wie zum Beispiel Naturkautschuk oder anderer hochmolekularer Kautschuke, weisen ohne Vemetzungsschritt nach der Beschichtung eine für die meisten Anwendungen ungenügende Kohäsion auf. Diese äußert sich in mangelnder Scherfestigkeit der so gefertigten selbstklebenden Bänder und kann sogar zur Ausbildung von störenden Kleberrückständen führen, welche eine gewünschte rückstandsfreie Wiederablösbarkeit nach dem Gebrauch unmöglich machen.

Dieser Mangel verhinderte über lange Jahre hinweg den Einsatz von Schmelzhaftklebern auf der Basis von Naturkautschuk in den traditionell stark von Naturkautschuk dominierten Einsatzgebieten von Selbstklebebändern, wie den Masking Tapes oder den Verpackungsklebebändem.

Die bisher für Schmelzhaftkleber auf Basis nicht-thermoplastischer Elastomerer eingesetzten Vemetzungsverfahren mittels ionisierender Strahlung (Elektronenstrahlen = ESH oder Ultraviolettes Licht = UV) erfordern das Vorhandensein von entsprechenden kostenintensiven Anlagen wie Strahlenquellen und aufwendigen Schutzeinrichtungen, zumal bei größeren Schichtdicken.

Darüber hinaus ist die UV-Vemetzung bei vielen üblichen Bestandteilen wie Füllstoffen, nicht transparenten Harzen und Pigmenten sowie im Falle dicker Kleberschichten nur äußerst begrenzt einsetzbar.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, sowie Verfahren der Herstellung, der Beschichtung und der Vemetzung von Schmelzhaftklebern auf Basis nicht-thermoplastischer Elastomerer werden auch in den Patenten WO 94 11 175 A1, WO 95 25 774 A1, WO 97 07 963 A1 und entsprechend US 5,539,033, US 5,550,175 sowie EP 0 751 980 81 und EP 0 668 819 B1 ausführüch dargestellt.
Hierbei werden die in der Haftklebertechnik gebräuchlichen Zusätze wie Tackifier-Harze, Weichmacher und Füllstoffe beschrieben.
Das jeweils offenbarte Herstellungsverfahren basiert auf einem Doppelschneckenextruder, der bei der gewählten Prozeßführung über Mastikation des Kautschuks und anschließender stufenweise Zugabe der einzelnen Zusätze mit einer entsprechenden Temperaturführung die Compoundierung zu einer homogenen Haftkleberabmischung ermöglicht.
Ausführlich wird der dem eigentlichen Herstellprozeß vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit des fertig abgemischten Schmelzhaftklebers ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlvernetzung (ESH) unumgänglich, ebenso wie den Einsatz von reaktiven Substanzen als ESH-Promotoren zum Erzielen einer effektiven Vemetzungsausbeute.

Beide Verfahrensschritte sind in den genannten Patenten beschrieben, die gewählten ESH-Promotoren neigen aber auch zu unerwünschten chemischen Vemetzungsreaktionen unter erhöhten Temperaturen, dies limitiert den Einsatz bestimmter klebrigmachender Harze.

Aufgrund der unvermeidbaren hohen Produkttemperaturen verbietet eine Compoundierung im Doppelschneckenextruder den Einsatz thermisch aktivierbarer Substanzen, die zur Vemetzung der Selbstklebmassen geeignet sind, wie zum Beispiel reaktiver (optional halogenierter) Phenolharze, Schwefel- oder Schwefelabspaltender Vernetzersysteme, weil es wegen der im Prozeß einsetzenden chemischen Vernetzungsreaktionen zu so erheblicher Viskositätserhöhung kommt, daß der resultierende Schmelzhaftkleber seine Streichfähigkeit einbüßt.

In der Patentanmeldung JP 95 278 509 wird ein Selbstklebeband offenbart, bei dessen Herstellung Naturkautschuk auf ein mittleres Molekulargewicht von M_{w} = 100.000 bis 500.000 mastiziert wird, um eine streichfähige homogene Mischung mit Kohlenwasserstoff-, Kolophonium-/derivat- oder Terpen-Harzen zu erhalten, die zwischen 140 °C und 200 °C mit einer Streichviskosität von 10 bis 50 x 10³ cps gut verarbeitbar ist, anschließend jedoch eine extrem hohe ESH-Dosis (40 Mrad) erfordert, um die für den Gebrauch notwendige Scherfestigkeit zu erhalten.
Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Nachteil der in den zitierten Dokumenten beschriebenen Vemetzungstechnologien (im wesentlichen ESH-Bestrahlung) ist neben der notwendigen Investition auch die Schädigung bestimmter empfindlicher Träger durch Elektronenstrahlen. Dieses kommt besonders im Falle von Papierträgern, Zellwollgeweben, silikonisierten Trennpapieren, vor allem aber im Falle von weitverbreiteten Folienmaterialien wie Polypropylen durch Verschlechterung der Reißdehnungseigenschaften zum Ausdruck.

Viele handelsübliche PVC-Folien neigen außerdem unter ESH-Bestrahlung zu Verfärbungen, welche sich bei hellen oder transparenten Folienqualitäten nachteilig auswirken.

Weiterhin werden viele der bei der Klebebandherstellung üblichen Releaselacke durch Elektronenbestrahlung geschädigt und damit in ihrer Wirkung beeinträchtigt. Dies kann im Extremfall zur Nichtabrollbarkeit von Klebebandrollen oder zur Nichtwiederverwendbarkeit von im Klebebandherstellungsprozeß benötigten Transfer-Trennpapieren führen.

Einige Synthesekautschuke, wie Polyisobutylen (PIB), Butylkautschuk (IIR) und halogenierter Butylkautschuk (XIIR) schließlich sind einer Elektronenstrahlenvernetzung nicht zugänglich und bauen unter Bestrahlung ab.

Ein Weg zur Minimierung dieser Nachteile besteht in der Verwendung von bestimmten Substanzen, welche die benötigte Strahlendosis und damit die Begleitschäden mindern. Eine Reihe solcher Substanzen sind als ESH-Promotoren bekannt. Allerdings können ESH-Promotoren auch zu unerwünschten chemischen Vemetzungsreaktionen unter erhöhten Temperaturen neigen, dies begrenzt die Auswahl der für die Schmelzhaftkleberherstellung brauchbaren ESH-Promotoren und limitiert darüber hinaus den Einsatz bestimmter klebrigmachender Harze. Diese Restriktionen und bestimmte vorteilhafte Kombinationen von ESH-Promotoren und nichtvernetzenden phenolischen Klebharzen sind Gegenstand insbesondere der Schrift WO 97/07963.

Der Einsatz von nicht-thermoplastischen Elastomeren wird ferner beschrieben in JP 95 331 197, wobei Naturkautschuk mit einem mittleren Molekulargewicht (Gewichtsmittel) M_{w} < 1 Million g/mol mit aliphatischen, nichtreaktiven Kohlenwasserstoffharzen Verwendung findet, der mit blockierten Isocyanaten abgemischt, bei 150°C fünf Minuten lang vorvernetzt und nach anschließendem Ausstreichen auf PET-Folie bei 180 °C mehrere Minuten (zum Beispiel 15 Minuten) lang ausgehärtet wird.

Nachteil dieses Verfahrens ist einesteils das bei der Vemetzungsreaktion freiwerdende Blockierungsmittel, welches einerseits, wenn es in dem Schmelzhaftklever verbleibt, die Klebeigenschaften des Bandes in vielerlei Hinsicht beeinträchtigen kann, und andererseits beim Ausdampfen zu Beschichtungsdefekten wie Porositäten führt und aufwendige Technik zur Absaugung und Entfernung dieser Blockierungsmittel nötig macht.

Von besonderem Nachteil ist aber die hohe Vemetzungstemperatur, welche temperaturempfindliche Träger wie viele Folien und Schäume prinzipiell ausschließt und im Falle von Papierträgern und Trennpapieren zur Versprödung führen kann.

Zusammenfassend kann festgestellt werden, daß zur Vernetzung der bekannten Schmelzhaftkleber auf Basis nicht-thermoplastischer Elastomerer entweder schädlich hohe Strahlendosen oder aber schädlich hohe Temperaturen bei langen Vemetzungszeiten benötigt werden und beides bei einer Vielzahl der üblichen Trägermaterialien Schädigungen zur Folge hat.

Aufgabe der Erfindung ist es, hier Abhilfe zu schaffen und die ökonomischen Vorteile der lösemittelfreien Fertigung und Beschichtung von Schmelzhaftklebern auf Basis von Naturkautschuk mit den chemisch-thermischen Vernetzungsmöglichkeiten der konventionellen Lösemitteltechnologie für dicke, auch gefülltte und eingefärbte Schmelzhaftkleber mit hohen Schichtdicken auf strahlen- und temperaturempfindlichen Trägermatertallen zu verbinden sowie die Nachteile der gemäß dem Stand der Technik in Schmelzhaftklebern verwendbaren thermischen Vemetzer zu umgehen.

Gelöst wird diese Aufgabe durch einen Schmelzhaftkleber, wie er im Hauptanspruch näher gekennzeichnet ist. Gegenstand der Unteransprüche sind vorteilhafte Fortführungen des Erfindungsgegenstandes, vorteilhafte Verwendungsmöglichkeiten sowie Verfahren zur Herstellung der mit dem Erfindungsgegenstand beschichteten Trägermaterialien.

Demgemäß beschreibt die Erfindung einen Schmelzhaftkleber auf der Basis von Naturkautschuk, der sich zusammensetzt aus:
- 100 Masseteilen des oder der nicht-thermoplastischen Elastomere,
- 1 bis 200 Masseteilen eines oder mehrerer klebrigmachender Harze,
- 1 bis 100 Masseteilen eines oder mehrerer reaktiver, gegebenenfalls auch halogenierter Phenol-Formaldehydharze, wobei deren Methylolgehalt zwischen 1 und 20 Gew.-% und/oder deren Halogengehalt zwischen 1 und 20 Gew.-%, jeweils bezogen auf das reaktive Phenolharz, beträgt,
- 1 bis 100 Masseteilen Vernetzungsbeschleunigersubstanzen.

Die Vernetzung von Schmelzhaftklebern auf der Basis von Naturkautschuk mit Phenol-Formaldehydharzen hat einen besonderen Vorteil darin, daß eine gewünschte rückstandsfreie Wiederablösbarkeit nach dem Gebrauch möglich gemacht wird.

Vorzugsweise weist der Naturkautschuk eine mittlere Molmasse von 300.000 bis 1,5*10⁶ g/mol auf, wobei der Wert mit einer GPC-Messung als Gewichtsmittel bestimmt wird. Bei der GPC-Messung (Gelpermeationschromatographie, eine als Säulenchromatographie durchgeführte Flüssigkeitschromatagraphie) wird eine flüssige Phase mit dem gelösten Polymeren durch ein Gel gegeben. Kleinere Moleküle des Gelösten können in alle Poren eindringen (diffundieren), ihnen steht das gesamte Volumen der mobilen Phase in der Trennsäule zur Verfügung. Aus diesem Grund werden sie länger in der Säule zurückgehalten als die größeren Moleküle. Solche Moleküle, die größer sind als die größten Poren des gequollenen Gels, können die Gelkömer nicht durchdringen und wandem an diesen vorbei: sie verlassen die Säule zuerst. Die Moleküle erscheinen daher im Eluat in der Reihenfolge abnehmender Molekülgröße. Da die Molekülgröße im allgemeinen der Molmasse proportional ist, bietet die Gelchromatographie die Möglichkeit zu Trennung und Reinigung von Substanzen verschiedener Molmassen und zur Molmassenbestimmung.

Weiter vorzugsweise zeigt der Schmelzhaftkleber in unvernetztem Zustand eine komplexe Viskosität von 10.000 bis 300.000 Pa*s bei 0,1 rad/s und 110 °C, bevorzugt 30.000 bis 170.000 Pa*s bei 0,1 rad/s und 110 °C, ganz besonders 40.000 bis 140.000 Pa*s bei 0,1 rad/s und 110 °C.

In einer weiteren vorteilhaften Weiterbildung der Erfindung umfaßt der Schmelzhaftkleber einen Polymerblend von Naturkautschuk und einem oder mehreren thermoplastischen Elastomeren, wobei letztere wieder ausgewählt werden können aus der anschließenden Aufzählung, und zwar einzeln oder in beliebiger Mischung:
- Polypropylene
- Polyethylene
- Metallocen-katalysierte Polyolefine
- Polyester
- Polystyrole
- Blockcopolymeren-Synthesekautschuke

Als reaktive Phenolharze können auch Gemische aus reaktiven Phenolharzen eingesetzt werden, die sich durch unterschiedliche Reaktivität auszeichnen. Desweiteren können reaktive, halogenierte Phenolharze verwendet werden, die sich durch gesteigerte Reaktivität hervorheben.

Als reaktive Phenolharze, die zum Einsatz kommen können, sind folgende zu nennen, wobei die Aufzählung nicht als abschließend zu verstehen ist.

### Hersteller SCHENECTADY EUROPE S.A., Bethune, Frankreich

| Bezeichnung | Methylolgehalt Gew.-% |
|---|---|
| SP 103 | 12 |
| SFP 121 | 17 |
| SP 126 | 11 |
| SP 134 | 16 |
| SP 154 | 10 |
| FRJ 551 | 14 |
| SFP 183 | 15 |

### Hersteller VIANOVA Resins GmbH, Wiesbaden

| Bezeichnung | Methylolgehalt Gew.-% |
|---|---|
| Vulkarasen PA 510 | 6-9 |
| Vulkarasen PA 130 | 11-14 |

### Hersteller SCHENECTADY EUROPE S.A., Béthune, Frankreich

### (reaktive, bromierte Phenolharze)

| Bezeichnung | Methylolgehalt Gew.-% | Bromgehalt Gew.-% |
|---|---|---|
| SP 1055 | 10-14 | 3,5 - 4,5 |
| SP 1056 | 7,5 - 11 | 6 - 9 |

Die Vernetzungreaktion kann in der üblichen Weise auf dem offenen Band in Kanalanlagen bei geeigneter Temperaturführung erfolgen.
Weiterhin können die in der Klebebandproduktion oft genutzten Temperprozesse, wie sie beispielsweise zur Entspannung von Folienmaterialien nötig sind, für die Vemetzung der Schmelzhaftkleber genutzt werden oder die Vemetzung kann bei Raumtemperatur auf dem Band erfolgen.

Die Beschleunigersubstanzen sind insbesondere gewählt aus der Gruppe der organischen Säuren, insbesondere der säuregruppenhaltigen Harze, der Metalloxide, der Metallstearate, der Metallresinate, der Chlorparaffine, der Gruppe der Chloroprene, der chlorierten und bromierten Butylkautschuke oder der chlorsulfonierten Polyethylene.

Dem Schmelzhaftkleber können Füllstoffe zugesetzt sein, die insbesondere ausgewählt werden können aus der Gruppe der Metalloxide, Kreiden, besonders bevorzugt der Kreiden mit spezifischen Oberflächen von 3 bis 20 m²/g, gefällter oder pyrogener Kieselsäuren, besonders bevorzugt der Kieselsäuren mit spezifischen Oberflächen von 20 bis 250 m²/g, bevorzugt 40 bis 200 m²/g, Voll- oder Hohlglaskugeln, besonders bevorzugt der Voll- oder Hohlglaskugeln mit dem mittleren Durchmesser von 3 bis 200 µm, bevorzugt 5 bis 135 µm, der Mikroballons, der Ruße, besonders bevorzugt der Ruße mit spezifischen Oberflächen von 20 bis 120 m²/g, und/oder der Glas- oder der Polymerfasem.
Ebenso können die oberflächenmodifizierten Varianten der oben aufgeführten Füllstoffe Verwendung finden.

Bei den Mikroballons handelt es sich um elastische, thermoplastische Hohlkugeln, die eine Polymerhülle aufweisen. Diese Kugeln sind mit niedrigsiedenden Flüssigkeiten oder verflüssigtem Gas gefüllt. Als Polymere für die Hülle sind insbesondere Acrylnitril, PVDC, PVC oder Acrylate geeignet. Als niedrigsiedende Flüssigkeit kommen Kohlenwasserstoffe wie die niederen Alkane, beispielsweise Pentan, als verflüssigtes Gas Chemikalien wie Isobutan in Frage.
Besonders vorteilhafte Eigenschaften zeigen sich, wenn es sich bei den Mikroballons um solche handelt, die bei 25 °C einen Durchmesser aufweisen von 3 µm bis 40 µm, insbesondere 5 µm bis 20 µm.
Durch Wärmeeinwirkung dehnen sich die Kapseln irreversibel aus und expandieren dreidimensional. Die Expansion ist beendet, wenn der Innen- und Außendruck sich ausgleichen. So erzielt man einen geschlossenzelligen Schaumträger, welcher sich durch gutes Auffließverhalten und hohe Rückstellkräfte auszeichnet.

Nach der thermischen Expansion aufgrund erhöhter Temperatur weisen die Mikroballons vorteilhafterweise einen Durchmesser von 20 µm bis 200 µm, insbesondere 40 µm bis 100 µm, auf.
Die Expansion kann dabei vor oder nach dem Einarbeiten in die Polymermatrix erfolgen, aber auch vor oder nach dem Einarbeiten in die Polymermatrix und dem Ausformen.
Möglich ist, auch die Expansion nach dem Einarbeiten in die Polymermatrix und vor dem Ausformen vorzunehmen..

Die Füllstoffe sollten in Anteilen von 1 bis 300 Masseteilen bezogen auf 100 Anteile Elastomerer zugesetzt werden, und zwar einzeln oder in beliebiger Kombination der einzelnen Füllstoffe.

Weiterhin vorteilhaft ist die Zumischung von Weichmachern in den Schmelzhaftkleber, die wiederum insbesondere ausgewählt aus der Gruppe der paraffinischen oder naphthenischen Öle, besonders bevorzugt der paraffinischen oder naphthenischen Öle mit kinematischen Viskositäten bei 20 °C zwischen 40 und 255 mm²/s, der oligomeren Nitrilkautschuke, besonders bevorzugt der flüssigen Nitrilkautschuke mit ACN-Gehalt von 20 bis 40 Gew.-%, besonders 20 bis 35 Gew.-%, der flüssigen Isoprenkautschuke, besonders bevorzugt der Isoprenkautschuke mit Molmassen zwischen 10000 und 70000 g/mol, der Oligobutadiene, besonders bevorzugt der Oligobutadiene oder funktionalisierten Oligobutadiene mit Molmassen von 1.500 bis 70.000 g/mol, der Weichharze, besonders bevorzugt der Weichharze mit Molmassen von 100 bis 2000 g/mol, besonders 250 bis 1700 g/mol, der Wollfette oder der Raps- und Rhizinusöle.

Verwendung finden kann der erfindungsgemäße Schmelzhaftkleber zur Herstellung eines selbstklebenden Artikels, indem dieser auf ein bahnförmiges Material, zum Beispiel ein beidseitig antiadhäsiv beschichtetes Material, zumindest einseitig aufgetragen wird, wobei der Schmelzhaftkleber mit einem bevorzugtem Masseauftrag von 5 bis 3000 g/m², besonders bevorzugt von 10 bis 200g/m² beschichtet wird.

Bei dem bahnförmigen Material handelt es sich insbesondere um einen einseitig oder beidseitig beschichteten Papierträger oder einen einseitig oder beidseitig beschichteten Polymerfolienträger, wobei der Masseauftrag zwischen 5 bis 200 g/m² und besonders von 10 bis 100 g/m² liegen kann.

Weiterhin können als Träger Gewebe oder Vliese aller Art eingesetzt werden.

Verfestigte Vliese werden beispielsweise auf Nähwirkmaschinen des Typs "Malivlies" der Firma Malimo hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer, ehemals Malimo, schon seit längerer Zeit hergestellt Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Oberals auch auf der Unterseite verfestigt ist.
Schließlich sind auch Nähvliese geeignet. Ein Nähvlies wird aus einem Vliesmaterial mit einer Vielzahl parallel zueinander verlaufender Nähte gebildet. Diese Nähte entstehen durch das Einnähen oder Nähwirken von textilen Fäden. Für diesen Typ Vlies sind Nähwirkmaschinen des Typs "Maliwatt" der Firma Karl Mayer, ehemals Malimo, bekannt.

Als Ausgangsmaterialien für den textilen Träger sind insbesondere Polyester-, Polypropylen- oder Baumwollfasern vorgesehen. Die vorliegende Erfindung ist aber nicht auf die genannten Materialien beschränkt, sondern es können eine Vielzahl weiterer Fasem zur Herstellung des Vlieses eingesetzt werden.

Genadelte, naßgelegte beziehungsweise luft- und/oder wasserstrahlverfestigte Vliese können beispielsweise bei der Firma Freudenberg bezogen werden.

Als besonders geeignet zeigen sich dabei Dicken des Schmelzhaftklebers auf dem bahnförmigen Material zwischen 5 µm und 3000 µm, vorzugsweise zwischen 15 µm und 150 µm.

Darüber hinaus kann der Schmelzhaftkleber auf einem beidseitig antiadhäsiv beschichtetes Trennpapier in einer Dicke aufgetragen sein von 20 µm bis 3000 µm, besonders 40 µm bis 1500 µm.

Ein besonders geeignetes Verfahren zur Herstellung von den oben dargelegten selbstklebenden Artikeln, insbesondere zur Herstellung hochleistungsfähiger selbstklebender Artikel wie Bänder oder Etiketten, besteht darin, die Beschichtung des Schmelzhaftklebers mit Hilfe eines Mehrwalzenauftragswerkes durchzuführen, das zwei bis fünf Walzen aufweist.

### Beispiele

Die folgenden Beispiele sollen die erfindungsgemäße Verwendung von reaktiven, durch zusätzliche Substanzen aktivierte und in ihrer Vernetzerwirkung beschleunigten Phenolformaldehydharzen zur chemischen Vernetzung von Naturkautschuk-Schmelzhaftklebern illustrieren.

Die eingesetzten Prüfmethoden sind im folgenden kurz charakterisiert:

Die klebtechnischen Prüfungen der Klebebandmuster wurden jeweils nach 24 h Lagerzeit bei Raumtemperatur und vergleichend je nach Beispiel nach 7-tägiger Temperung bei 70 °C durchgeführt, wobei die getemperten Muster zusätzlich vor den Messungen zwecks Vergleichbarkeit der Meßergebnisse 24h bei 23 °C und 50 % Luftfeuchtigkeit gelagert wurden.

### Prüfmethode 1: Klebkraft

Die Klebkraft (Schälfestigkeit) der Klebebandmuster wurde nach AFERA 4001 bestimmt. Sinkende Klebkraftwerte sind im allgemeinen ein Zeichen für zunehmenden Vemetzungsgrad des Schmelzhaftklebers.

### Prüfmethode 2: Scherfestigkeit

Die Scherfestigkeit der untersuchten Klebebandmuster wurde nach PSTC 7 (Holding Power) bestimmt. Alle angegebenen Werte wurden bei Raumtemperatur und der angegebenen Belastung von 20 N mit einer Verklebungsfläche von 20x13 mm² bestimmt. Die Ergebnisse sind in Minuten Haltezeit angegeben.

Ein Anstieg der Scherstandzeiten bedeutet im untersuchten Bereich für ein- und dieselbe Schmelzhaftkleberrezeptur einen höheren Vernetzungsgrad beziehungsweise eine höhere Kohäsion.

Im weiteren Sinne muß auch die Betrachtung der Versagensart erfolgen, wobei gilt:
- untervernetzte (schwach kohäsive) Schmelzhaftkleber:
   kurze Scherstandzeiten bei köhäsivem Versagen
- optimal vernetzte Schmelzhaftkleber:
   lange Scherstandzeiten
- übervernetzte (zu kohäsive) Schmelzhaftkleber:
   kurze Scherstandzeiten durch adhäsives Versagen

### Prüfmethode 3: Gelgehalt

Der Vernetzungsgrad des bereits beschichteten Naturkautschuk-Schmelzhaftklebers wurde auf dem fertigen Klebeband durch den Gelgehalt des Schmelzhaftklebers bestimmt. Hierzu wurden Klebebandproben in Stücken von 20 cm² ausgestanzt und in einem Beutel aus Polyethylen-Spinnvlies (Tyvek der Firma Du Pont mit einem Flächengewicht von ca. 55 g/cm²) eingeschweißt. Die Muster wurden 3 Tage unter Schütteln bei Raumtemperatur mit Toluol extrahiert. Das Toluol wurde täglich gewechselt. Nach erfolgter Extraktion wurde das Toluol gegen Hexan/Heptan ausgetauscht und die Proben bei 110 °C getrocknet. Der Gelanteil wurde durch Differenzwägungen bestimmt, wobei die Extraktionsverluste des Spinnvlieses und des Trägers berücksichtigt wurden.
Das Ergebnis wird als Gelwert in Prozent, wobei das anfangs unvernetzte Elastomere zu 100 % gesetzt wird, angegeben.

### Prüfmethode 4: Quelltest

In einer vereinfachten Prozedur kann der Vernetzungsgrad des Schmelzhaftklebers auf der Polymerbasis nicht-thermoplastischer Elastomerer auch vergleichend aus Quellungsmessungen bestimmt werden.

Hierzu wird ein Klebebandstreifen für 10 Minuten in Siedegrenzenbenzin 60/95 gelegt und anschließend visuell und mechanisch mit einem Spatel auf Vorhandensein und auf Konsistenz des auf dem Band verbleibenden gequollenen Schmelzhaftkleber-Geles untersucht.

Das Ergebnis wird als "Quelltest" angegeben und umfaßt eine Skala von 0 bis 6.

Es bedeuten:

| Quelltestnote | Gelkonsistenz bei Quelltest | Entspricht Gelgehalt nach Methode 4 [%] |
|---|---|---|
| 0 | Masseschicht auflösend und schlammig d.h. Vernetzung nicht erkennbar | 0 - 5 |
| 1 | Starkes Quellen, Masse stark schleimig und selbstablaufend d.h. sehr geringe Vemetzung | 5 - 15 |
| 2 | Starkes Quellen, Masse schleimig und leicht abschiebbar | 15 - 25 |
| 3 | Gutes Quellen, Masse weniger schleimig und abschiebbar | 25 - 35 |
| 4 | Schwaches Quellen, Masse kaum schleimig, noch abschiebbar | 35 - 45 |
| 5 | Kaum Quellen, Masse fast schichtbeständig und kaum abschiebbar | 45 - 55 |
| 6 | Kein Quellen, Masse schichtbeständig und nur abkratzbar | > 55 |

Die optimale Balance von Kohäsion und Adhäsion, ausgedrückt durch die Quelltestnote des jeweiligen Haftklebers, hängt von der Anwendung des konkreten Klebebandes ab. Für Allzweck-Maskierbänder beträgt die optimale Quelltestnote beispielsweise 2-3, für Hochtemperatur-Maskierbänder mit Temperaturbeständigkeiten größer 140 °C beträgt die optimale Quelltestnote 4-5.

### Prüfmethode 5: Viskoelastische Eigenschaften von Schmelzhaftklebern:

Schließlich läßt sich der Vernetzungsgrad eines gegebenen Schmelzhaftklebers sehr einfach aus der Messung seiner viskoelastischen Eigenschaften bestimmen. Die Bewertung dieser Messergebnisse erfordert jeweils den Vergleich mit dem unvernetzten Zustand des Schmelzhaftklebers, da die Rezeptur hier starken Einfluß auf die absoluten Meßwerte hat. Als Vernetzungsmaß können sowohl das Verhältnis der Viskosität des venetzten Schmelzhaftklebers zu der Viskosität des unvernetzten Schmelzhaftklebers als auch das entsprechende Verhältnis der Verlust-Winkel, üblicherweise ausgedrückt als tan δ, angegeben werden.

Zur Bestimmung der viskoelastischen Eigenschaften von Schmelzhaftklebern wurden dynamisch-mechanische Messungen in Torsionsrheometem durchgeführt, wobei oszillierende Verformungen vorgegeben und resultierende Schubspannungen gemessen wurden (siehe hierzu zum Beispiel W.M. Kulicke "Fließverhalten von Stoffen und Stoffgemischen", Hüthig und Wepf, 1986).

In den Beispielen wurde ein Gerät des Typs RDA II (Rheometric Dynamic Analyzer II der Rheometric Scientific GmbH, ein Torsionsrheometer mit Platte/Platte-Meßsystem, benutzt. In das Meßsystem wurde eine präparierte, plane, blasenfreie Probe des Schmelzhaftklebers von 1,5 mm Schichtdicke eingebracht. Die Messung erfolgte im Temperaturbereich von -50 °bis +200 °C und einem Frequenzbereich von 0,1 rad/s bis 100 rad/s bei konstanter Normalkraft von 150g.
Die Meßwerterfassung erfolgte rechnergestützt, die viskoelastischen Eigenschaften (Speichermodul G', des Verlustmodul G", Verlustwinkel tan δ, komplexe Viskosität η*) des Schmelzhaftklebers wurden für die angegebenen Temperatur- und Frequenzbereiche in üblicher Weise aus Höhe und Zeitverlauf der gemessenen Schubspannungen ermittelt.

Messungen dieser Art können sowohl an präparierten Schmelzhaftkleberproben als auch an vollständigen Klebebändern durchgeführt werden, wobei in letzterem Falle Klebebandproben bis zum Erreichen der geeigneten Schichtdicke aufeinanderlaminiert werden müssen und die Trägerseite der obersten Schicht mit Hilfe eines geeigneten Konstruktivklebers an der entsprechenden Platte des Meßsystems befestigt werden muß.

### Prüfmethode 6: Verarbeitungsviskosität des Schmelzhaftklebers

Um schnelle Aussagen über die viskoelastische Eigenschaften eines Schmelzhaftklebers, insbesondere des Abbau- beziehungsweise Vernetzunggrades des Gerüstpolymeren, während der Fertigung zu erhalten, werden dynamisch-mechanische Messungen gemäß oben beschriebener Prüfmethode 5 im Frequenzbereich 0,1 rad/s bis 100 rad/s bei konstanter Normalkraft von 150g durchgeführt, die Meßtemperatur jedoch konstant bei 110°C belassen. Die Schmelzhaftkleberproben werden im Meßsystem vor der Messung 7 min bei 110 °C vortemperiert.
Der Wert der komplexen Viskosität bei einer Frequenz von 0,1 rad/s und einer Temperatur von 110 °C gibt bei identischer Rezeptur Aufschluß über die Kohäsivität beziehungsweise Vernetzungsgrades des Schmelzhaftklebers.

Zur Quantifizierung des Vemetzungsgrades wird die Vernetzungszahl VZ als Verhältnis der jeweiligen komplexen Viskosität der vernetzten Schmelzhaftkleberrezeptur zur komplexen Viskosität der unvernetzten Schmelzhaftkleberrezeptur eingeführt:
- VZ =: Viskosität des vernetzten Schmelzhaftklebers/Viskosität des unvernetzten Schmelzhaftklebers.

### Prüfmethode 7: Molmassenbestimmung mittels Gelpermeationschromatographie

Die Molmassen in den Naturkautschuk-Schmelzhaftklebem enthaltenen Elastomeranteils wurde ausschließlich an unvernetzten Schmelzhaftkleberproben bestimmt, die Molmassenbestimmung erfolgte mittels GPC an Polystyrolstandard mit folgendem Meßsystem
- Eluent: Tetrahydrofuran (THF) p.a.
- Säulen:: PSS-SDV, 5µm 103 Å, ID 8.0 mm × 300 mm
- Vorsäule:: PSS-SDV, 5µm 105 Å, ID 8.0 mm × 300 mm PSS-SDV, 5µm 106 Å, ID 8.0 mm × 300 mm
- Pumpe:: TSP P200
- Fluß:: 1.0 ml/min
- Injektionssystem:: TSP AS3000 mit 100 ml Injektionsvolumen
- Temperatur: 25 °C
- Detektoren:: TSP UV 2000 UV/VIS Detektor bei 254 nm Shodex Differentialfraktiometer RI 71
- Auswertung:: PSS- WinGPC Version 4.02

In den Beispielen P1 bis P3 wurde einstufig oder mehrstufig jeweils ein Naturkautschuk-Schmelzhaftkleber der Brutto-Rezeptur PA hergestellt. Alle Rezepturen sind in phr angegeben, das heißt im Bezug auf 100 Masseteile Naturkautschuk.

Es wurden eingesetzt:
- Naturkautschuk: SVR 5L (zu beziehen bei Fa. Weber Schaer, Hamburg)
- Klebharz: "Staybelite Resin", ein hydriertes Kolophoniumharz (Her-
- steller: HERCULES) und
HERCOTAC 205, ein aromatisch modifiziertes aliphatisches Kohlenwasserstoffharz (Fa. Hercules BV, Rijswijk, NL)
- Füllstoff: Zinkoxid "Silox Actif" des Herstellers SI LOX, Belgien
- Phenolvernetzungsharz: ein octyl-Phenolformaldehydharz mit einem Methylolgehalt von 6 bis 9 Gew.-% ("Vufkaresen PA 510" des Herstellers HOECHST)
- Alterungsschutzmittel: Lowinox ® 22M46, ein 2,2-Methylen-bis-[6-(1,1-dimethylethyl)-4-methyl-phenol)] von der Firma GREAT LAKES

In den Beispielen P4 bis P6 wurden neben bereits beschriebenen Rezepturbestandteilen das Polyterpenharz auf β-Pinen-Basis ("Dercolyte S 115" des Herstellers Les Dérivés Résiniques & Terpéniques, Dax/Frankreich) und als Weichmacher das paraffinische Weißöl "Ondina G 17" des Herstellers Deutsche SHELL AG, Hamburg),
im Beispiel P4 zusätzlich ein Polychloroprenkautschuk des Herstellers DU PONT ("Neoprene WRT"),
im Beispiel P5 zusätzlich ein chloriertes Copolymer aus Isobutylen und Isoprene mit der Bezeichnung "EXXON ®Chlorobutyl" des Herstellers EXXON,
als halogenierter Kautschuk wurde in dem Beispiel P6 zusätzlich ein bromierter Butylkautschuk "Polysar Brombutyl X2" des Herstellers BAYER, Leverkusen eingesetzt,
in dem Beispiel P8 das reaktive Brom-Phenolharz "SP 1056" (Kondensationsprodukt aus Octyl-Phenol und Formaldehyd mit einem Methylolgehalt von 9 bis 13 Gew.-% und einem Bromgehalt von 6-9 Gew.-% des Herstellers SCHENECTADY EUROPE S.A., 62404 Bethune Cédex, Frankreich
verwendet.

Der Naturkautschuk wurde vor der Verwendung granuliert, und zwar in einem Granulator der Fa. Pallmann unter Verwendung von geringen Mengen Talkums als Trennmittel. Die synthetischen Kautschuke wurden ebenfalls in Granulatform eingesetzt.

Die batchweise, wie in den Beispiel P1 und P2, oder kontinuierlich, wie in dem Beispiel P3, hergestellten Naturkautschuk-Schmelzhaftkleber wurden sofort nach ihrer Herstellung unter Verwendung eines biegesteifen 2-Walzenauftragswerks beschichtet. Die Beschichtung des Schmelzhaftklebers erfolgte nach dem oben geschilderten 2-Walzenauftragsverfahren auf einen schwachgekreppten, nach branchenüblichen Verfahren imprägnierten, mit Release- und Primerschicht ausgerüsteten Papierträger mit einer Kleberschichtdicke von 50 µm. Zwischen der ersten und der zweiten bahnführenden Beschichtungswalze wurde gemäß der Auftragsdicke ein Beschichtungsspalt eingestellt. Die erste Walze war auf 140 °C temperiert, die bahnführende Walze auf 60 bis 80 °C. Der dem Walzenspalt zugeführte Naturkautschuk-Schmelzhaftkleber wies, je nach Beispiel, eine Temperatur von 70 °C bis 120 °C auf. Die Beschichtung erfolgte mit der dem jeweiligen Herstellverfahren angepassten Bahngeschwindigkeit. Im Falle der kontinuierlichen Schmelzhaftkleberherstellung in dem Beispiele P3 wurde der Naturkautschuk-Schmelzhaftkleber dem Walzenspalt mittels eines Gurtbandes oder Förderextruders zugeführt.

### Rezeptur PA

| | phr |
|---|---|
| Naturkautschuk SVR 5L | 100,00 |
| Staybelite Resin | 35,29 |
| Hercotac 205 | 19,61 |
| Vulkarasen PA 510 | 19,61 |
| Silox actif | 17,65 |
| Lowinox ® 22M46 | 3,92 |
| Summe | 196,08 |

### Beispiel P1

In einem ersten Verfahrensschritt wurde ein Vorbatch hergestellt. Der Vorbatch wurde nach der als VB-PA bezeichneten Rezeptur in einem Banbury-Kneter des Typs GK 1,4 N der Firma Werner & Pfleiderer, Stuttgart, hergestellt.

### Vorbatch-Rezeptur VB-PA

| | Phr |
|---|---|
| Naturkautschuk SVR 5L, granuliert | 100,00 |
| Harz Hercotac 205 | 19,61 |
| Lowinox | 3,92 |
| Silox actif | 17,65 |

Knetkammer und Rotoren waren auf 25 °C temperiert, die Schaufeldrehzahl betrug 50 min⁻¹. Das Gesamtgewicht des Vorbatches betrug 1,1 kg. Alle Bestandteile wurden trocken vorvermischt und gemeinsam mit dem Weißöl dosiert. Eine Mischzeit von sechs Minuten war ausreichend für die Homogenisierung der Bestandteile des Vorbatches.

In einem Verfahrensschritt 2 wurde der Naturkautschuk-Schmelzhaftkleber fertiggemischt. In einer Knetmaschine der Bauart LUK1.0 K3 der Firma Werner & Pfleiderer, Stuttgart, wurden hierzu dem Vorbatch alle weiteren Zuschlagsstoffe zugesetzt, so daß ein Naturkautschuk-Schmelzhaftkleber entsprechend der Bruttorezeptur PA resultierte. Der Vorbatch wurde ½ Minute geknetet, dann das gesamte Klebharz einschließlich des reaktiven Phenolharzes gemäß Rezeptur F-PA zugesetzt.

### Rezeptur F-PA

| | phr |
|---|---|
| Vorbatch VB-PA | 141,18 |
| Staybelite Resin | 35,29 |
| Vulkarasen PA 510 | 19,61 |

Das Gesamtgewicht des Schmelzhaftklebers betrug 500 g. Die Kammertemperatur war während des gesamten Fertigmisch-Vorganges auf auf 80 °C eingestellt. Die Gesamtknetzeit betrug 10 Minuten.

### Beispiel P2

### Beispiel P1 wurde wiederholt.

Für die Vereinfachung des Entleerens wurde im zweiten Verfahrensschritt des Fertigmischens eine Knetmaschine der Bauart VI U 20 L der Firma Aachener Misch- und Knetmaschinen-Fabrik Peter Küpper, Aachen, mit Austragsschnecke benutzt. Der Vorbatch wurde ½ Minute geknetet, dann das gesamte Klebharz sowie das reaktive Phenolharz gemäß Rezeptur F-PA zugesetzt.

Das Gesamtgewicht des Schmelzhaftklebers betrug 12 kg. Die Kammertemperatur wurde auf 80 °C eingestellt. Die Gesamtknetzeit betrug 10 Minuten, die Entleerungszeit 7 Minuten.

### Beispiel P3

Zur Herstellung des Naturkautschuk-Schmelzhaftklebers wurde ein Planetwalzenextruder der Firma ENTEX Rust & Mitschke mit drei Walzenzylindem benutzt. Der Durchmesser der Walzenzylinder betrug 70 mm. Der erste der Anlaufringe war mit radialen Bohrungen versehen, über welche die Flüssigkeiten mittels Dosierpumpen zugeführt wurden. Gravimetrische Dosierer, Dosierpumpen und die Drehzahl der Zentralspindel wurden so eingestellt, daß sich eine Produktrate von 65 kg/h bei homogener Mischung ergab. Die Temperierung der einzelnen Walzenzylinder erfolgte so, daß sich eine Produkttemperatur von 80 °C ergab.

Die nach den Beispielen P1 bis P3 erhaltenen Klebebänder vernetzen nach einer 7-tägigen Lagerung bei 70 °C und sind sämtlich als Abdeckklebebänder mit kurzzeitiger Temperaturbelastbarkeit > 120°C geeignet.

### Ergebnisse der Beispiele P1 bis P3

| | Lagerung 4 Tage bei Raumtemperatur | Lagerung 7 Tage bei 70°C | Meßmethode |
|---|---|---|---|
| Schertest 20 N auf Stahl [min] | | | PSTC 7 |
| BEISPIEL P1 | 23 | 4226 | |
| BEISPIEL P2 | 50 | 3850 | |
| BEISPIEL P3 | 12 | 2112 | |
| Klebkraft auf Stahl [N/cm] | | | AFERA 4001 |
| BEISPIEL P1 | 4,1 | 3,7 | |
| BEISPIEL P2 | 4,1 | 3,5 | |
| BEISPIEL P3 | 4,5 | 4,0 | |
| Getwert | | | Prüfmethode 3 |
| BEISPIEL P1 | 4,3 | 30 | |
| BEISPIEL P2 | 2,7 | 29 | |
| BEISPIEL P3 | 5 | 19 | |
| Quelltest | | | Prüfmethode 4 |
| BEISPIEL P1 | 0 | 3 | |
| BEISPIEL P2 | 0 | 3 | |
| BEISPIEL P3 | 0 | 2,5 | |
| komplexe Viskosität bei T=110°C, | | | Prüfmethode 6 |
| f=0,1 rad/s [Pas] | | | |
| BEISPIEL P1 | 7,3*10⁴ | 1,18*10⁵ | |
| BEISPIEL P2 | 6,5*10⁴ | 1,19*10⁵ | |
| BEISPIEL P3 | 5,1*10⁴ | 1,01*10⁵ | |

Die Vernetzungsreaktion ist anhand der Meßwerte deutlich zu erkennen.

Die Beispiele P4 bis P6 zeigen Schmelzhaftkleberrezepturen, die mit dem Verfahren gemäß Beispiel P1 hergestellt wurden.

Im ersten Verfahrensschritt wurden jeweils die Rezepturbestandteile Naturkautschuk, Synthesekautschuke, Silox actif, Alterungsschutzmittel und Weißöl mit einer Mischzeit von 4 Minuten im Innenmischer gemischt. Die übrigen Rezepturbestandteile wurden im zweiten Verfahrenschritt zudosiert. Die Beschichtung erfolgte jeweils nach dem oben beschriebenen 2-Walzenverfahren. Die Schmelzhaftkleber und die beschichteten Klebebänder wurden nach 4 Tagen Lagerzeit bei Raumklima sowie nach 7 Tagen Temperung bei 70 °C geprüft, alle Beispiele zeigen eine eindeutige Vernetzung.
Die Ergebnisse sind in Tabellenform gezeigt.

### Beispiel P4

| | Phr | | |
|---|---|---|---|
| SVR 5L | 78 | | |
| Neoprene WRT | 22 | | |
| Staybelite Resin | 46 | | |
| Vukarasen PA 510 | 6,0 | | |
| Dercolyte S 115 | 22 | | |
| Silox actif | 20 | | |
| Weißöl | 6 | | |
| Summe | 200 | | |

| | Lagerung 4 Tage bei Raumtemperatur | Lagerung 7 Tage bei 70 °C | Meßmethode |
|---|---|---|---|
| Schertest 20 N auf Stahl [min] | 32 | 180 | PSTC 7 |
| Klebkraft auf Stahl [N/cm] | 4,2 | 3,8 | AFERA 4001 |
| Gelwert | 7,7 | Nicht betimmt | Prüfmethode 3 |
| Quelltest | 0 | 1 | Prüfmethode 4 |
| komplexe Viskosität bei T=110°C, f=0,1 rad/s [Pas] | 6,04e+04 | 9,01e+04 | Prüfmethode 6 |

### Beispiel P5

| | phr | | |
|---|---|---|---|
| SVR 5L | 78 | | |
| EXXON ®Chlorobutyl | 22 | | |
| Staybelite Resin | 46 | | |
| Vulkarasen PA510 | 6,0 | | |
| Dercolyte S 115 | 22 | | |
| Silox actif | 20 | | |
| Weißöl | 6 | | |
| Summe | 200 | | |

| | Lagerung 4 Tage bei Raumtemperatur | Lagerung 7 Tage bei 70 °C | Meßmethode |
|---|---|---|---|
| Schertest 20 N auf Stahl [min] | 38 | 629 | PSTC 7 |
| Klebkraft auf Stahl [N/cm] | 4,1 | 3,5 | AFERA 4001 |
| Gelwert | 7,4 | nicht bestimmt | Prüfmethode 3 |
| Quelltest | 0 | 1 | Prüfmethode 4 |
| komplexe Viskosität bei T=110°C, f=0,1 rad/s [Pas] | 6,53e+04 | 9,37e+04 | Prüfmethode 6 |

### Beispiel P6

| | phr | | |
|---|---|---|---|
| SVR 5L | 78 | | |
| Polysar Brombutyl X2 | 22 | | |
| Staybelite Resin | 46 | | |
| Vulkarasen PA510 | 6,0 | | |
| Dercolyte S 115 | 22 | | |
| Silox actif | 20 | | |
| Weißöl | 6 | | |
| Summe | 200 | | |

| | Lagerung 4 Tage bei Raumtemperatur | Lagerung 7 Tage bei 70°C | Meßmethode |
|---|---|---|---|
| Schertest 20 N auf Stahl [min] | 25 | 7406 | PSTC 7 |
| Klebkraft auf Stahl [N/cm] | 2,9 | 2,7 | AFERA 4001 . |
| Gelwert | 9,1 | nicht bestimmt | Prüfmethode 3 |
| Quelltest | 0 | 4 | Prüfmethode 4 |
| komplexe Viskosität bei T=110°C, f=0,1 rad/s [Pas] | 7,79e+04 | 1,37e+05 | Prüfmethode 6 |

### Beispiel P7

| | Phr | | |
|---|---|---|---|
| SVR 5L | 100,00 | | |
| Staybelite Resin | 38 | | |
| Hercotac 205 | 11 | | |
| Vulkarasen PA510 | 19 | | |
| Silox actif | 17 | | |
| Sontal | 3,8 | | |
| | | | |

| | Lagerung 4 Tage bei Raumtemperatur | Lagerung 7 Tage bei 70 °C | Meßmethode |
|---|---|---|---|
| Schertest 20 N auf Stahl [min] | 103 | > 10000 | PSTC 7 |
| Klebkraft auf Stahl [N/cm] | 2,9 | 2,5 | AFERA 4001 |
| Gelwert | 7,1 | nicht bestimmt | Prüfmethode 3 |
| Quelltest | 0 | 6 | Prüfmethode 4 |
| komplexe Viskosität bei T= 110°C, f=0,1 rad/s [Pas] | 1,60e+05 | 5,42e+05 | Prüfmethode 6 |

### Beispiel P8

| | phr | | |
|---|---|---|---|
| SVR 5L | 100 | | |
| Staybelite Resin | 19 | | |
| Hercotac 205 | 37 | | |
| Harz SP 1056 | 11 | | |
| Silox actif | 19 | | |
| | | | |

| | Lagerung 4 Tage bei Raumtemperatur | Lagerung 7 Tage bei 70°C | Meßmethode |
|---|---|---|---|
| Schertest 20 N auf Stahl [min] | 324 | > 10000 | PSTC 7 |
| Klebkraft auf Stahl [N/cm] | 2,5 | 2,4 | AFERA 4001 |
| Gelwert | 5,3 | nicht bestimmt | Prüfmethode 3 |
| Quelltest | 1 | 6 | Prüfmethode 4 |
| komplexe Viskosität bei T=110°C, f=0,1 rad/s [Pas] | 1,60e+05 | 3,42e+05 | Prüfmethode 6 |

### Beispiel P9

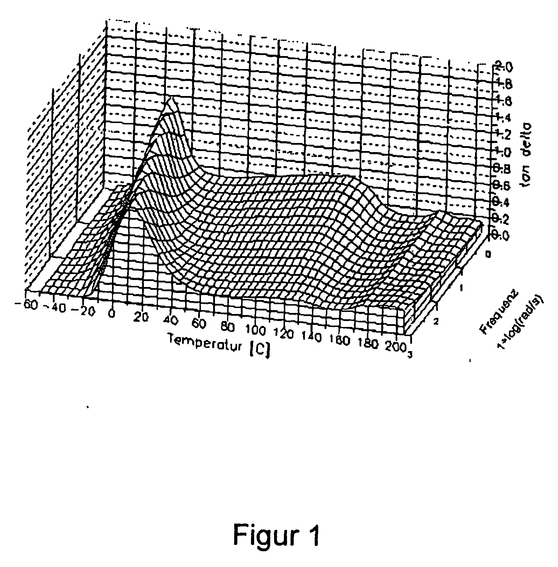

Es wurde ein Abdeckband gemäß dem Verfahren aus Beispiel P3 hergestellt und gemäß Prüfmethode 5 untersucht. Der Abfall des Verslustwinkel tan δ bei Temperaturen über 130 °C zeigt den Vernetzungsvorgang des Schmelzhaftklebers auf dem Papierträger während des Meßvorganges (siehe Figur 1).

| | phr |
|---|---|
| SVR 5L | 100 |
| Staybelite Resin | 50 |
| Vulkarasen PA510 | 10 |
| Silox actif | 33 |
| Weißöl | 15 |
| Dercolyte S 115 | 42 |

## Patentansprüche

1. Schmelzhaftkleber auf der Basis von Naturkautschuk, mindestens bestehend aus 100 Massetellen des Naturkautschuks,
1 bis 200 Masseteilen eines oder mehrerer klebrigmachender Harze,
1 bis 100 Masseteilen eines oder mehrerer reaktiver Phenolharze mit Methylolgehalten von 1 bis 20 Gew.-% bezogen auf das reaktive Phenolharz,
1 bis 100 Masseteilen von vernetzungsbeschleunigenden Substanzen.

2. Schmelzhaftkleber nach Anspruch 1, **dadurch gekennzeichnet, daß** er basiert auf einem Polymerblend von Naturkautschuk und einem oder mehreren thermoplastischen Elastomeren ausgewählt aus der Gruppe, der Polypropylene, der Polyethylene, der Metallocen katalysierten Polyolefinen, der Polyester, der Polystyrolen, und der Blockcopolymeren Synthesekautschuke.

3. Schmelzhaftkleber nach den Ansprüchen 1 bis 2, **dadurch gekennzeichnet daß** die vernetzungsbeschleunigenden Substanzen ausgewählt sind aus der Gruppe der Chloroprene, chlorierten Butylkautschuke, bromierten Butylkautschuke und der chlorsulfonierten Polyethylene oder aus der Gruppe der Metalloxide, der Gruppe der organischen Säuren oder ihrer Salze, insbesondere der säuregruppenhaltigen Harze, der Metallstearate und der Metallresinate.

4. Schmelzhaftkleber nach den Ansprüchen 1 bis 3, **dadurch gekennzeichnet, daß** die reaktiven Phenolharze halogeniert sind und einen Halogengehalt von 1 bis 20 Gew.-%, bezogen auf das reaktive Phenolharz aufweisen.

5. Schmelzhaftkleber nach den Ansprüchen 1 bis 4, **dadurch gekennzeichnet, daß** das reaktive Phenolharz aus einem Gemisch unterschiedlicher reaktiver Phenolharze, welche sich durch unterschiedliche Reaktivitäten auszeichnen, besteht.

6. Schmelzhaftkleber nach Anspruch 1 bis 5, **dadurch gekennzeichnet, daß** dem Schmelzhaftkleber Füllstoffe zugesetzt sind, insbesondere ausgewählt aus der Gruppe der Metalloxide, Kreiden, gefällter oder pyrogener Kieselsäuren, Voll- oder Hohlglaskugeln, der Mikroballons, der Ruße und/oder der Glas- oder der Polymerfasern.

7. Schmelzhaftkleber nach zumindest einem der vorherigen Ansprüche, **dadurch gekennzeichnet, daß** dem Schmelzhaftkleber Weichmacher zugesetzt sind, insbesondere ausgewählt aus der Gruppe der paraffinischen oder naphthenischen Öle, der oligomeren Nitrilkautschuke, der flüssigen Isoprenkautschuke, der Oligobutadiene, der Weichharze, der Wollfette und/oder der Raps- und Rhizinusöle.

8. Selbstklebender Artikel, bestehend aus einem bahnförmigen Material, auf das zumindest einseitig der Schmelzhaftkleber nach mindestens einem der vorhergehenden Ansprüche aufgetragen ist.

9. Selbstklebender Artikel nach Anspruch 8. **dadurch gekennzeichnet, daß** die Dicke der Schmelzhaftkleber auf dem bahnförmigen Material zwischen 5 µm und 3000 µm, beträgt, vorzugsweise zwischen 15 µm und 150 µm.

10. Selbstklebender Artikel, bestehend aus einem beidseitig antiadhäsiv beschichteten Trennpapier, auf das der Schmelzhaftkleber nach mindestens einem der vorhergehenden Ansprüche in einer Dicke aufgetragen ist von 20 µm bis 3000 µm, besonders 40 µm bis 1500 µm.

11. Verfahren zur Herstellung von selbstklebenden Artikeln, insbesondere zur Herstellung hochleistungsfähiger selbstklebender Artikel wie Bänder oder Etiketten, **gekennzeichnet dadurch, daß** die Beschichtung des Schmelzhaftklebers nach mindestens einem der Ansprüche 1-7, mit Hilfe eines Mehrwalzenauftragswerkes erfolgt, das zwei bis fünf Walzen aufweist.

## Revendications

1. Auto-adhésif en masse fondue à base de caoutchouc naturel, constitué d'au moins
100 parties en masse de caoutchouc naturel,
1 à 200 parties en masse d'une ou de plusieurs résines qui rendent adhésif,
1 à 100 parties en masse d'une ou de plusieurs résines phénoliques réactives, présentant des teneurs en méthylol entre 1 et 20% en poids par rapport à la résine phénolique réactive,
1 à 100 parties en masse de substances d'accélération de la réticulation.

2. Auto-adhésif en masse fondue selon la revendication 1, **caractérisé en ce qu'**il est à base d'un mélange de polymères de caoutchouc et d'un ou de plusieurs élastomères thermoplastiques, choisis dans le groupe des polypropylènes, des polyéthylènes, des polyoléfines catalysées par un métallocène, des polyesters, des polystyrènes et des caoutchoucs de synthèse à copolymères à blocs.

3. Auto-adhésif en masse fondue selon les revendications 1 à 2, **caractérisé en ce que** les substances d'accélération de la réticulation sont choisies dans le groupe des chloroprènes, des caoutchoucs de butyle chlorés, des caoutchoucs de butyle bromés et des polyéthylènes chlorosulfonés ou dans le groupe des oxydes de métal, le groupe des acides organiques ou leurs sels, en particulier des résines contenant des groupes acides, des stéarates de métal et des résinates de métal.

4. Auto-adhésif en masse fondue selon les revendications 1 à 3, **caractérisé en ce que** les résines phénoliques réactives sont halogénées et présentent une teneur en halogène de 1 à 20% en poids par rapport à la résine phénolique réactive.

5. Auto-adhésif en masse fondue selon les revendications 1 à 4, **caractérisé en ce que** la résine phénolique réactive est constituée d'un mélange de différentes résines phénoliques réactives qui se distinguent par des réactivités différentes.

6. Auto-adhésif en masse fondue selon les revendications 1 à 5, **caractérisé en ce que** l'auto-adhésif en masse fondue est mélangé avec des charges, en particulier choisies dans le groupe des oxydes métalliques, des craies, des silices précipitées ou pyrogènes, des billes en verre creuses ou pleines, des microballons, des suies et/ou des fibres en verre ou en polymère.

7. Auto-adhésif en masse fondue selon au moins l'une quelconque des revendications précédentes, **caractérisé en ce que** l'auto-adhésif en masse fondue est additionné de plastifiants, en particulier choisis dans le groupe des huiles paraffiniques ou naphténiques, des caoutchoucs de nitrile oligomères, des caoutchoucs d'isoprène liquides, des oligobutadiènes, des résines souples, des graisses de laine et/ou des huiles de colza et de ricin.

8. Objet auto-adhésif, constitué d'un matériau en forme de bande, sur lequel est appliqué, au moins d'un côté, l'auto-adhésif en masse fondue selon au moins l'une quelconque des revendications précédentes.

9. Objet auto-adhésif selon la revendication 8, **caractérisé en ce que** l'épaisseur de l'auto-adhésif en masse fondue sur le matériau en forme de bande est située entre 5 µm et 3000 µm, de préférence entre 15 µm et 150 µm.

10. Objet auto-adhésif, constitué d'un papier de séparation revêtu des deux côtés de manière anti-adhésive, sur lequel est appliqué l'auto-adhésif en masse fondue selon au moins l'une quelconque des revendications précédentes en une épaisseur de 20 µm à 3000 µm, en particulier de 40 µm à 1500 µm.

11. Procédé pour la fabrication d'objets auto-adhésifs, en particulier pour la fabrication d'objets auto-adhésifs puissants tels que des bandes ou des étiquettes, **caractérisé en ce que** le revêtement de l'auto-adhésif en masse fondue selon au moins l'une quelconque des revendications 1 à 7 est réalisé à l'aide d'un appareil d'application à plusieurs cylindres qui présente deux à cinq cylindres.

## Claims

1. Hot-melt pressure-sensitive adhesive based on natural rubber, at least comprising
100 parts by mass of the natural rubber,
from 1 to 200 parts by mass of one or more tackifying resins,
from 1 to 100 parts by mass of one or more reactive phenolic resins whose methylol content is from 1 to 20% by weight based on the reactive phenolic resin,
from 1 to 100 parts by mass of crosslinking accelerator substances.

2. Hot-melt pressure-sensitive adhesive according to Claim 1, **characterized in that** it is based on a polymer blend of natural rubber and one or more thermoplastic elastomers selected from the group consisting of polypropylenes, polyethylenes, metallocene-catalysed polyolefins, polyesters, polystyrenes and synthetic block copolymer rubbers.

3. Hot-melt pressure-sensitive adhesive according to Claims 1 and 2, **characterized in that** the crosslinking accelerator substances are selected from the group consisting of chloroprenes, chlorinated butyl rubbers, brominated butyl rubbers, chlorosulphonated polyethylenes, metal oxides, organic acids or salts thereof, especially resins containing acid groups, metal stearates and metal resinates.

4. Hot-melt pressure-sensitive adhesive according to Claims 1 to 3, **characterized in that** the reactive phenolic resins are halogenated and have a halogen content of from 1 to 20% by weight, based on the reactive phenolic resin.

5. Hot-melt pressure-sensitive adhesive according to Claims 1 to 4, **characterized in that** the reactive phenolic resin comprises a mixture of different reactive phenolic resins which are distinguished by different reactivities.

6. Hot-melt pressure-sensitive adhesive according to Claims 1 to 5, **characterized in that** fillers are added to the adhesive which are selected in particular from the group consisting of metal oxides, chalks, precipitated or pyrogenic silicas, solid or hollow glass beads, microballoons, carbon blacks and/or glass fibres or polymer fibres.

7. Hot-melt pressure-sensitive adhesive according to at least one of the previous claims, **characterized in that** plasticizers are added to the adhesive which are selected in particular from the group consisting of paraffinic or naphthenic oils, oligomeric nitrile rubbers, liquid isoprene rubbers, oligobutadienes, soft resins, wool fats and/or rapeseed oils and castor oils.

8. Self-adhesive article comprising a web-form material, to at least one side of which the hot-melt pressure-sensitive adhesive according to at least one of the preceding claims is applied.

9. Self-adhesive article according to Claim 8, **characterized in that** the thickness of the hot-melt pressure-sensitive adhesive on the web-form material is between 5 µm and 3000 µm, preferably between 15 µm and 150 µm.

10. Self-adhesive article comprising a release paper having an anti-adhesive coating on both sides, to which the hot-melt sensitive adhesive according to at least one of the previous claims is applied in a thickness of from 20 µm to 3000 µm, in particular from 40 µm to 1500 µm.

11. Process for producing self-adhesive articles, especially for producing high-performance self-adhesive articles such as tapes or labels, **characterized in that** the hot-melt pressure-sensitive adhesive according to at least one of Claims 1-7 is applied with the aid of a multi-roll applicator unit which comprises from two to five rolls.
